# EUROPEAN PATENT APPLICATION

(11) **EP 2 778 957 A1**
(43) Date of publication of application: **17.09.2014**
(21) Application number: 13181621.7
(22) Date of filing: 23.08.2013
(51) Int. Cl.: G06F 17/30

(54) **Method and system for automatically displaying information based on task context**

(30) Priority: 15.03.2013 US 201313841845
(71) Applicant: Mitel Networks Corporation, Ottawa, ON K2K 2W7 (CA)
(72) Inventor: Tam, Terry, Ottawa, Ontario K1J 7V2 (CA); Davies, Jim, Arnprior, Ontario K7S 3G7 (CA)
(74) Representative: Derry, Paul Stefan

(57) **Abstract**

A system and method for automatically displaying information based on a context of a task are disclosed. An exemplary system includes an application that receives a task query input from a user. The system determines or infers a context of the task and displays information in a configuration that is based on the context of the task.

## Description

### Field of the Invention

The present disclosure generally relates to electronic systems and methods for displaying information based on a context of a task. More particularly, exemplary embodiments of the disclosure relate to systems and methods that receive a task input, determine the context of the task, and display information based on and in response to the context of the task.

### Background of the Invention

Applications, such as search applications or applications that include a search function, often include a user client to receive a task request, such as a search request, employ an application to perform the task, and display the information in a predetermined or a user-selected format; the predetermined and user-selected formats generally include a limited number of predefined formats, having a predefined order for displaying the information. For example, the information may displayed in a predefined "standard" format, an image view, a map view, a news view, or the like, wherein the order of the information is based on predefined criteria, such as a popularity of a website, based on sponsorship, or the like.

Although such applications work relatively well, the applications may not provide a user with information the user wants and the applications require that a user perform an additional step to display the information in a format other than a standard or a preselected format.

Accordingly, improved electronic methods and systems for viewing information in response to a task request are desired.

### Summary of the Invention

A first aspect of the invention provides a system for automatically displaying information based on a context of a task, the system comprising:
a device comprising a display and a task client for receiving a task input from a user;
a registrar comprising metadata associated with an information display configuration; and
an engine for comparing the task input and data within the registrar to determine a context of the task;
wherein a configuration of information displayed on the client device corresponds to the context of the task.

The system may further comprise a task application.

The task application may be a search application.

The device may be selected from the group consisting of smart phone, a tablet computer, a personal computer, a work station, a server, and a conference unit.

The engine may infer a display configuration if a match is not found between the data and the task input.

The registrar may include a plurality of presentation metadata for the context.

An application may populate the registrar with metadata.

The system may further comprise a learning engine, wherein the learning engine populates the registrar with metadata.

The registrar may include information for normalization, thesaurus mapping, auto-completion, and contextual application launch.

The configuration may be selected from one or more of a tree format, a list, and a table.

A second aspect of the invention provides a method for automatically displaying information based on a context of a task, the method comprising the steps of:
providing a client for receiving a task from a user;
providing a registrar comprising metadata associated with an information display configuration;
entering a task using the client;
optionally, an application providing one or more suggested strings;
optionally, accepting a string;
querying the registrar for context lookup;
using an application to determine a context of a task;
determining presentation metadata corresponding to the task;
performing the task; and
displaying information resulting from the task, wherein the information is displayed in a configuration corresponding to the presentation metadata.

The step of performing a task may comprise performing a search.

The method may further comprise the step of registering data with the registrar.

The step of registering may include employing a learning engine.

A third aspect of the invention provides a method, the method comprising the steps of:
launching an application;
querying for presentation metadata in a registrar;
sending presentation metadata to the application; and
sending presentation information to a user client to display application information in a context that corresponds to the context of the task.

The method may further comprise the step of registering data with the registrar.

The step of registering may include employing a learning engine.

The method may further comprise the step of entering a task using the user client.

The method may further comprise the step of providing one or more suggested strings.

The method may further comprise the step of a search and launch application step.

### Brief Description of the Drawing Figures

Subject matter of the present disclosure is particularly pointed out and distinctly claimed in the concluding portion of the specification. A more complete understanding of the present disclosure, however, may best be obtained by referring to the detailed description and claims when considered in connection with the drawing figures, wherein like numerals denote like elements and wherein:
FIG. 1 illustrates a system in accordance with exemplary embodiments of the disclosure.
FIG. 2 illustrates a table including presentation metadata associated with a task in accordance with additional exemplary embodiments of the disclosure.
FIG. 3 illustrates a presentation metadata grouping in accordance with exemplary embodiments of the disclosure.
FIG. 4 illustrates a sequence chart in accordance with additional exemplary embodiments of the disclosure.
FIG. 5 illustrates another sequence chart in accordance with yet additional embodiments of the disclosure
FIG. 6 illustrates yet another sequence chart in accordance with additional embodiments of the disclosure.

It will be appreciated that elements in the figures are illustrated for simplicity and clarity and have not necessarily been drawn to scale. For example, the dimensions of some of the elements in the figures may be exaggerated relative to other elements to help to improve understanding of illustrated embodiments of the present invention.

### Detailed Description of Exemplary Embodiments

The description of various embodiments of the present disclosure provided below is merely exemplary and is intended for purposes of illustration only; the following description is not intended to limit the scope of an invention disclosed herein. Moreover, recitation of multiple embodiments having stated features is not intended to exclude other embodiments having additional features or other embodiments incorporating different combinations of the stated features.

The disclosure describes exemplary electronic systems and methods for determining a context of a task entered by a user or as a result of an application launch and displaying information based on the context of the task. As set forth in more detail below, a configuration of displayed information, including a layout of the information (e.g., table, tree, or the like), a formatting of the information (e.g., language, numeric formatting, or the like), and/or a sort order of the information may be based on the context of a task. For example, in the context of a search task, search results for "images for the Mona Lisa" may be automatically displayed differently from search results for "location of the Mona Lisa." Similarly, in the context of applications, a user interface may display differently upon launch of an application, depending on the context from which the application is launched-e.g., whether it was launched from a particular application or type of application.

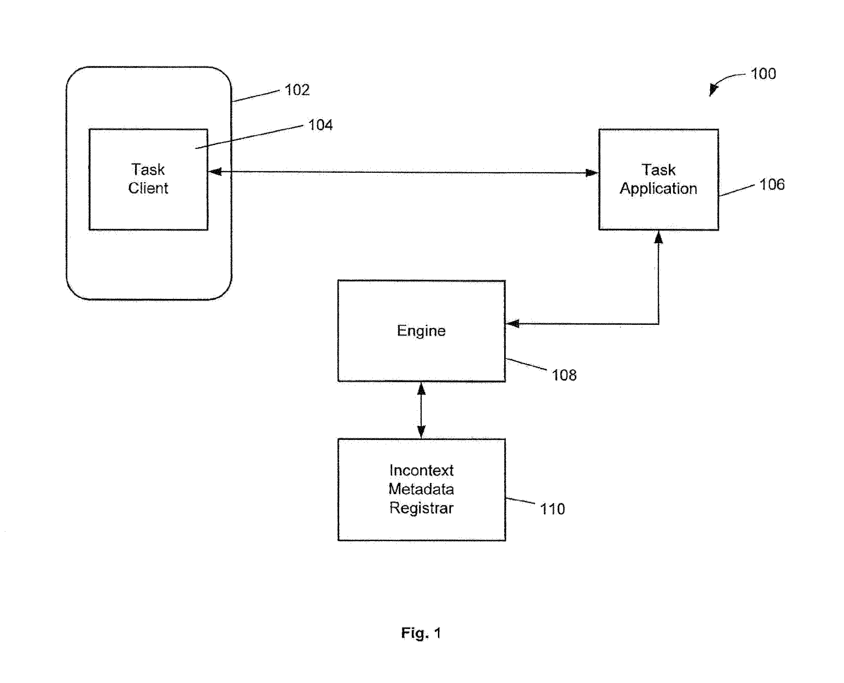

FIG. 1 illustrates a system 100 for displaying information based on a context of a task in accordance with various exemplary embodiments of the invention. System 100 includes a user device 102, a task client 104 on user device 102, a task application 106, an engine 108 (e.g., a comparison engine, a natural language interpreter, artificial intelligence, a learning engine, or the like), and an incontext metadata registrar 110. Task client and user client are used interchangeably herein.

Although illustrated as separate units, task client 104, task application 106, engine 108, incontext metadata registrar 110, and/or various combinations thereof may form part of the same application and/or reside on the same device (e.g., device 102). Alternatively, task client 104, task application 106, engine 108, and incontext metadata registrar may reside on two or more separate devices. By way of example, task client 104 may reside on user device 102 and task application 106 may reside on a server, another computer, another device, or the like, and engine 108 and incontext metadata registrar may reside on the same or separate devices as task application 106.

As used herein, the term "application" refers to coded instructions executable by a processor that can be used to perform singular or multiple related tasks. For example, an application may include enterprise software, medical records software, graphic player, media players, or any other suitable software. The application may be an independently operable application or form part of another application. By way of one example, task application 106 is part of an enterprise system, which can be accessed within the enterprise system, but which can also operate independently of the enterprise system.

Device 102 may include any suitable electronic device, such as a smart phone, a tablet computer, a personal computer, a work station, a server, a conference unit, or any other device that includes a user interface to allow a user to enter a task and a display for displaying information based on the context of the task entered by a user.

Device 102 may be a stand-alone device or may be coupled to a network using wired or wireless technologies and task application 106, engine 108, and/or incontext metadata registrar 110 may form part of the network (e.g., one or more may reside on a server within a network). Exemplary networks include a local area network (LAN), a wide area network, a personal area network, a campus area network, a metropolitan area network, a global area network, or the like. Device 102 may be coupled to the network using, for example, an Ethernet connection, other wired connections, a WiFi interface, mobile telecommunication technology, other wireless interfaces, or the like. Similarly, the network may be coupled to other networks and/or to other devices typically coupled to networks.

Task client 104 allows a user to enter a task using device 102 using a suitable user interface. For example, a user may use a keyboard, mouse, or touchscreen to enter a task using client 104.

Task application 106 is an application that performs a function in response to a task. Exemplary tasks include launching an application, performing a search, and the like.

Engine 108 uses a processor to compare a task to data stored in incontext metadata registrar 110. Engine 108 determines whether there is an actual or inferred match to data in incontext metadata registrar 110, and if there is a match, displaying information based on the context of the task. If a match is not found, engine 108 may infer a display configuration to use to display the information.

Incontext metadata registrar 110 stores information corresponding to various display configurations, which correlates to a context of a task. The display configuration information may correlate to a set of one or more predefined tasks and/or may correlated to inferred tasks.

United States Publication No. 2012/0179706 to Hobbs et al., published July 12, 2012, entitled "Contextual application launch via search query," discloses a technique to determine a context of a search, which may be used to determine a task context as described herein. The contents of U.S. Publication No. 2012/0179706 are incorporated herein by reference, to the extent the contents do not conflict with the present disclosure.

In an exemplary system, a context of a task may be obtained by comparing objects (e.g., nouns) and actions (e.g., verbs) of a task (e.g., entered by a user using task client 104) to objects and/or actions stored in incontext metadata registrar 110. Although at least one of objects and actions may be stored in incontext metadata registrar 110, the system may desirably store at least actions, since objects are more likely to change over time. Incontext metadata registrar 110 may be in a variety of configurations, such as a random access transient metadata store.

One technique that may be used to populate incontext metadata registrar 110 with information includes using task application 106 or other application(s) to populate incontext metadata registrar 110. The application(s) may communicate actions that can be performed by the respective applications and these actions can be stored in incontext metadata registrar 110. The data may be communicated in an unsolicited or a solicited manner. For example, the application(s) may include a search application that uses a search engine to crawl websites, hard drives, and the like and index files that are found. Or, another application can send information relating to tasks that the application can perform to a search application, such that the search application can search data having objects and/or actions relevant to the application(s). Other techniques for registering information in incontext metadata registrar 110 include learning operations, where information may be added to incontext metadata registrar 110 from a learning engine. Additionally or alternatively, if the system does not recognize a context, the system may display options for a display configuration to a user to allow a user to select a display configuration. The system may be designed to learn from such user selections.

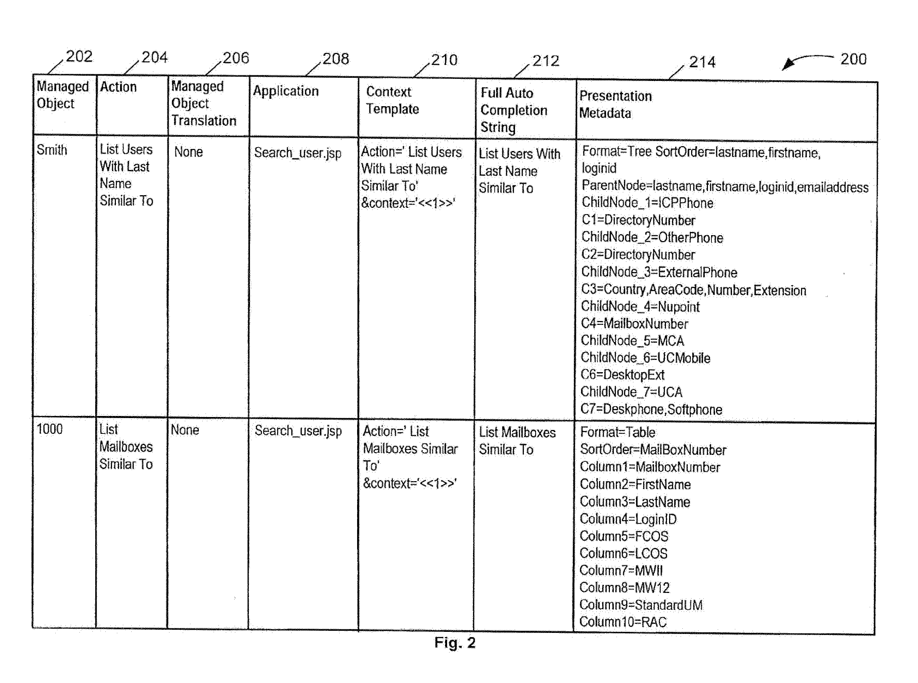

FIG. 2 illustrates a table 200 of exemplary registration data (e.g., stored in incontext metadata registrar 110), with metadata to drive a task (a search query in the illustrated example) to action and presentation metadata, with additional information for normalization, thesaurus mapping, auto-completion, and contextual application launch. Table 200 includes fields for Managed Objects 202, Actions 204, Managed Object Translation 206, Application 208, Context Template 210, Full Auto Completion String 212, and Presentation Metadata 214.

For simplicity, the example illustrated in FIG. 2 is for a single presentation action. Examples of multiple presentation metadata per Action 204 are discussed below. Presentation Metadata 214 may be registered using any of the techniques described above. Further, Presentation Metadata 214 can be used to easily maintain consistency of user interface presentation of information across various device formats and between various applications on a system or a cluster of systems to provide a common integrated look and feel to a user.

In accordance with various embodiments of the disclosure, Presentation Metadata 214 is used to inform an application (e.g., task application 106) how to display information once the information is determined from an Action 204 (e.g., a search). For example, Presentation Metadata 214 can inform an Application 208 to display information in one or more of a tree format, a list, a table, etc., and to sort information based on occurrences of the information, based on advertising or sponsorship, or the like.

As noted above, the examples illustrated in FIG. 2 relate to a task that is a search. The first illustrated task is searching for persons with a last name similar to an entered object. The second example is a search for mailboxes similar to a mailbox number pattern for a user-entered object. In the illustrated cases, the object is dynamic and the managed object replaces the <<1>> token for the operation.

In the first example, for an operation to "list users with a last name similar to smith," the system calls a user and services search Application called Seach_user.jsp with the corresponding Context Template. The Application may query for Presentation Metadata and discover that the results of the query should be displayed, in the illustrated example, in a tree format with user information as the parent node and the user's corresponding services as child nodes. In the illustrated example, the sort order is based on last name, then first name, then login identification.

In the second example illustrated in FIG. 2 to "list mailboxes similar to 1000," the Search_user.jsp application is called and information is displayed in a table format, sorted by mailbox number and the column lists are based on the associated Presentation Metadata in table 200.

As noted above, multiple presentation metadata may be associated with a search context (e.g., an action and/or object). Using multiple presentation metadata templates may be desirable, for example, when an application may be run on devices with different display formats-e.g., a mobile device and a desktop device. For example, a user's workflow may be limited due to, for example, user interface restrictions of the mobile device. And, the display format and the amount of information that may be displayed on a mobile device may be less compared to a desktop or similar device.

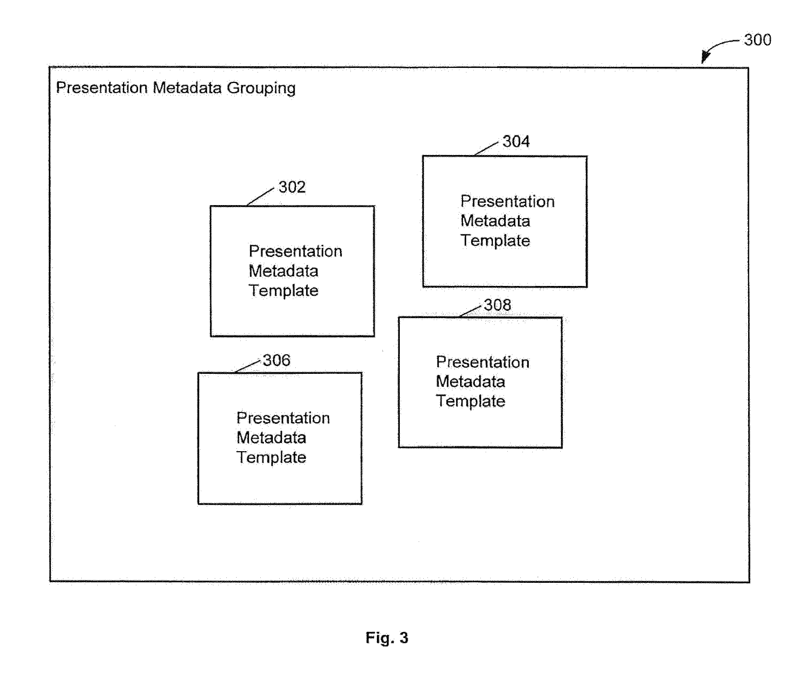

FIG. 3 illustrates a presentation metadata grouping 300 for supporting multiple presentation metadata templates 302-308, which can be used for displaying information in different configurations-e.g., each grouping 300 is suitable for a desktop, mobile device, or other device. Each template 302-308 within a grouping 300 may correspond to a different display configuration for a given context.

Table 1, below, illustrates a presentation metadata grouping, which includes two unique identifiers: one for rapid identification internally in a system (e.g., a universally unique identifier (UUID) and a second for a human readable unique string, which allows for a consistent user interface display to a user when identifying the grouping). In the illustrated example, the grouping also includes a list of presentation metadata template identifiers to identify which templates are in the group.

**Table 1**

| Elements | Description |
|---|---|
| PresentationGroupingID | Universally unique identifier identifying the grouping |
| PresentationGroupingName | Human readable unique identifier representing the presentation metadata grouping |
| PresentationTemplateList | A list of PresentationTemplateID detailing which templates belong to the grouping |

Table 2 illustrates an exemplary format of the presentation metadata template. The exemplary template includes a set of two unique identifiers and a non-restrictive rule set with enough information to help an application determine if the template is suitable for the application. Exemplary rules include what type of device is in use (e.g., mobile, desktop, etc.), which application context is servicing the task (e.g., was the task from an independent application or not), and the like.

**Table 2**

| Elements | Description |
|---|---|
| PresentationTemplateID | Universally unique identifier identifying the presentation metadata template |
| PresentationTemplateName | Human readable unique identifier representing the presentation metadata template |
| PresentationRuleSet | A description of when the template is applicable to help an application automatically determine which template to use if there is more than one template in the grouping |
| PresentationFormat | A series of elements describing the preferred formatting. An example is the name value pair set of parameters listed in **Error! Reference source not found.** for the "List Users With Last Name Similar To" verb (action) |

As noted above, a task may be initiated from various applications. Accordingly, in accordance with some embodiments of the disclosure, a list of applications may be available to service an action or object using a common framework/process. In other words, the application column in table 200 may include more than one application per action (or object).

Template metadata may also include a non-restrictive list of elements describing the formatting for the presentation of the information. Exemplary elements include display format, such as tree, table, or list, sort order information, and which information to display and in which order to display the information.

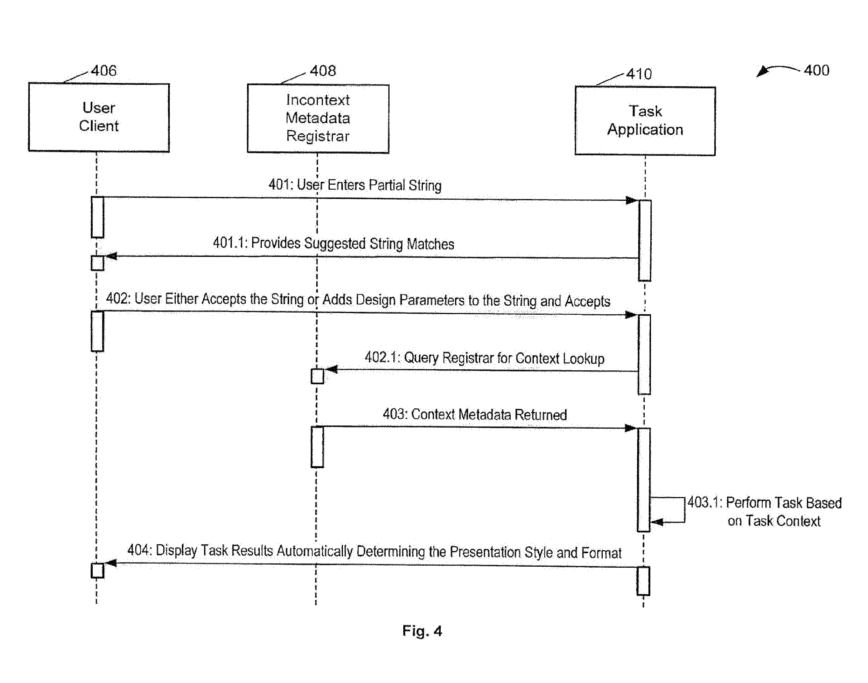

Turning now to FIG. 4, an exemplary method or sequence overview 400 for displaying information based on a context of a task is illustrated. Method 400 includes a user entering a task or partial task (401) using a user client 406, optionally, an application providing a suggested string or strings (401.1), optionally, a user accepting the string or adding desired parameters to the string (402), querying an incontext metadata registrar 408 for context lookup (402.1), sending context metadata to a task application 410 (403), performing a task (403.1), and displaying task information based on the context of the task, wherein a configuration of the displayed information (e.g., style, format, and/or content) depends on the context of the search.

In the illustrated example, a user enters a query using task or user client 406 on a device (e.g., device 102) (401.1). The task may be text based, speech recognition based, image recognition based, or the like. The query may be a partial string, in which case an application (e.g., task application 410) may return one or more suggested strings for the task (401.1). The user may edit and complete the task string as desired using user client 406 and pass the completed string back to application 410 (402). Application 410 then queries incontext metadata registrar 408 to determine a context of the task, what, if any dynamic parameters are present in the string, and corresponding presentation metadata template to use. Application 410 then performs a task (e.g., a search) (403.1) and automatically displays the information resulting from the task in a configuration corresponding to the presentation metadata.

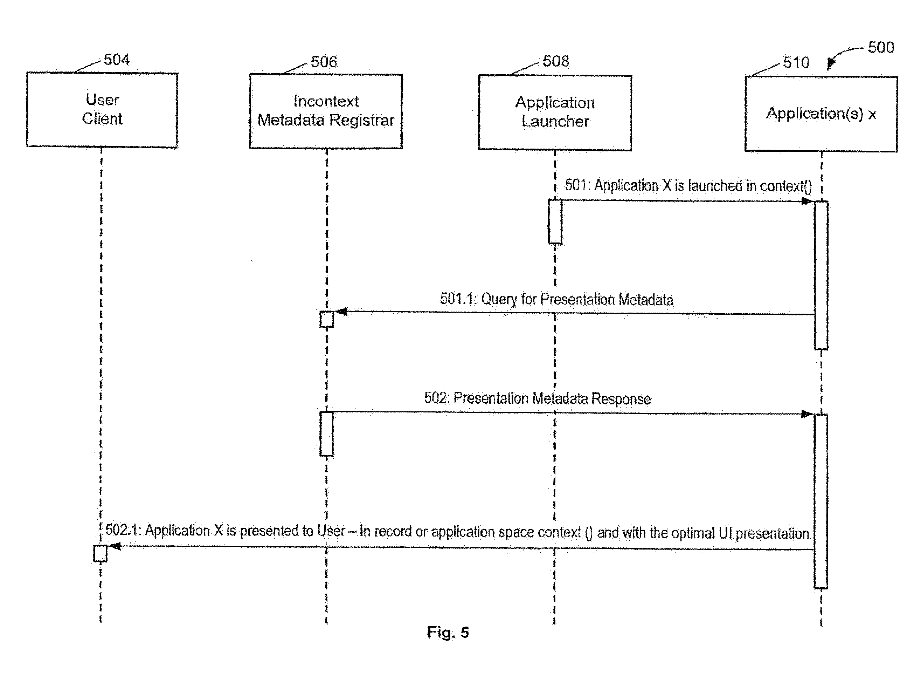

FIG. 5 illustrates another method or sequence overview 500 for displaying information based on a context of a task. In this case, a configuration of information display is a function of an application launch in context (described in more detail below). Method 500 includes the steps of launching an application 510 (501), querying for presentation metadata in an incontext metadata registrar 506 (501.1), sending presentation metadata to application 510 (502), and sending presentation information to a user client 504 to display application information in a configuration that corresponds to a context of the task. Method 500 may additionally include steps of registering data in an incontext search registrar, a user entering a task using a task client, an application or registrar providing a suggested string or strings, and a user accepting the string or adding desired parameters to the string, as described herein in connection with method 400 and method 600.

In accordance with the method illustrated in FIG. 5, when application 510 launches, the application queries incontext metadata registrar 506 prior to presenting information to a user. In this case, application 510 can automatically determine the best configuration to present information to a user based on a context of a task.

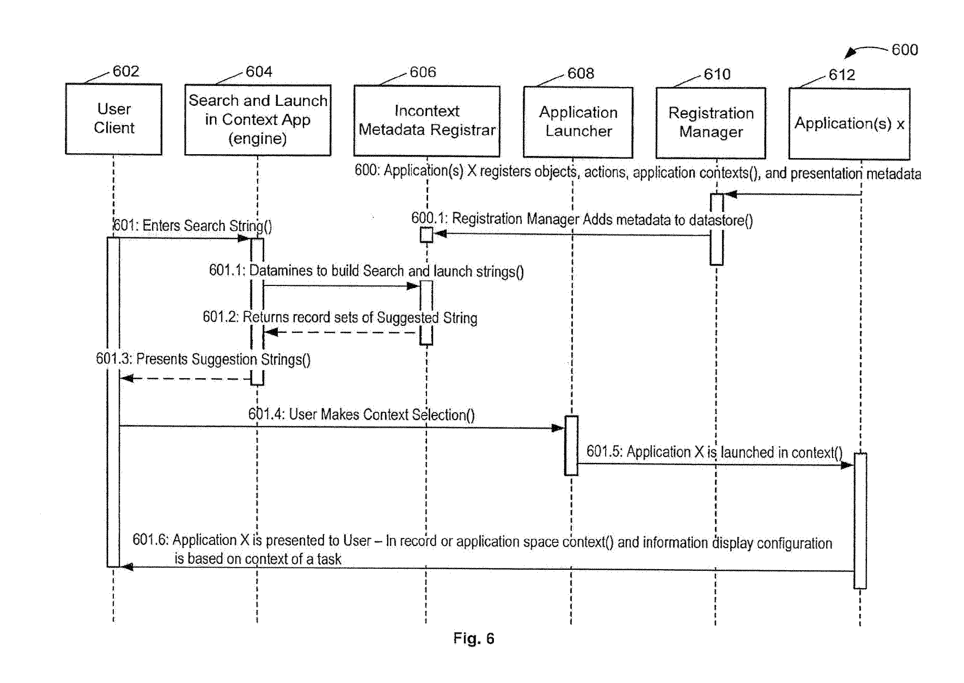

FIG. 6 illustrates another method 600 in accordance with yet additional exemplary embodiments of the disclosure. Method 600 includes a registration process (600) followed by a search and launch operation (601) that includes displaying application information in a configuration that depends on a context of a task.

In the illustrated example, registration begins with registering metadata with an incontext metadata registrar 606 based on registration information from one or more applications 612. Applications 612 may register data stores of objects and actions, as well as action mapping during step 600.

A search string is entered using a user client 602 during step (601). A Search and Launch in Context Application 604 can data mine Incontext Metadata Registrar 606 to build search and launch strings. Search and Launch in Context Application 604 can perform data mining or querying of the registered metadata data store(s) based on the user input received during step (601).

At step 601.2, Incontext Metadata Registrar 606 can return record sets of suggested strings and in context tokens to the Search and Launch in Context Application 604.

At step 601.3, a user is optionally presented with a suggested string. Next, a user can accept or amend and accept the proposed string, and the string can be sent to an Application Launcher 608 (601.4). Application Launcher 608 may then formulate appropriate arguments to build the launch context for the selected application and launch the target Application 612 (601.5). User client 602 may then be presented with Application 612, wherein Application 612 information display configuration is based on a context of the task or search.

The systems and methods described herein can be used to display information based on a context of a task and can be further configured to launch one or more desired applications based on a task. The systems and methods have been described above in connection with various tasks, including searches. Exemplary methods and systems may be used in connection with other tasks, such as automatically configuring a display and/or workflow based on a context from which an application is launched.

The methods and systems disclosed herein are advantageous over similar systems that require a user to manually input a desired display format, because the systems and methods do not require the additional step. The methods and systems can determine a context of a task (e.g., a search or a context of an application launch) and display information based on the context of the task. For example, the methods and systems can determine whether a search response view, a standard view, an image listing view, a video listing view, or a news listing view is more appropriate and then automatically display the task information in an appropriate configuration or view. Furthermore, the systems and methods described herein can display more relevant information related to the task and display information that is more suitable to a user device, compared to typical systems.

For example, a method and system can be used to provide dynamic rendering of a user interface of an application or a database. The method and system can determine a context, e.g., using one or the techniques described herein, and based on the context, different menus, fields, and parameters of an application's user interface can be displayed to a user on a user device, depending on, for example, likely desired tasks or workflows induced from metadata corresponding to the context of the task.

The systems and methods described herein can be used by accounts administrator. In this case, a search on user identifications, cell phone number, and office phone number might result in a mobile twinning workflow to be used, while a search for user identifications, available DiDs, or free licenses might invoke an add a new user workflow. In these and similar examples, workflows could be either pre-configured, that is anticipated by the developer or dynamically created based completely on the search context-e.g., using a learning engine as described above. Pre-configured workflows have advantage of including additional parameters and fields that the user will likely use beyond those included in the search criteria. Dynamic workflows would allow the application user or administrator to have an optimized user interface experience based on the context, even in workflows and scenario's not directly anticipated by the developer. The user interface could be completely constructed from the search context or user task.

A specific example of using the system and method described herein is a dynamic rendering of a quick add application in a suite product. A typical quick add application might walk an administrator through a provisioning flow to add services to an end user. Static templates are created manually ahead of time by the administrator to outline which services are available for an end user on a per template basis. To add services to a user, the administrator will select an appropriate template for the user at the start of the quick add application, and the quick add application would present an optimized workflow for the administrator to complete the task. Manually creating the static templates is time consuming and complex to manage, especially in the case where there is a large matrix of various services that end users can have. The methods and systems described herein can solve this problem by dynamically creating the templates for a quick add or similar application dynamically based on context of the search or task.

In a case where the administrator provides the following task: "find all users with no services and add office phone and voicemail," a system and method as described herein, may determine that the search user application will need to be launched to allow an administrator to fine tune a result set that contains a list of all users with no services. The result set would then feed into a quick add application. Extending the available metadata in FIG. 2, an exemplary method and system can dynamically create a template required by the quick add application. In this case, a template requesting an office phone and a voicemail service can be generated.

The systems and methods described herein can also be used in a Medical ERP system. In this case, a medical administrator can perform a search on patient name, available rooms and doctor name, and the user interface could be for the "admit patient" workflow which over above the explicitly queried fields provides additional data (e.g., health plan coverage, special diet needs, etc.) and the series of appropriate admit menu actions for admissions. And, the system could be configured such that if an administrator searches on patient name, doctor name, and outstanding test requests, the user interface could be tuned to the "book an appointment" workflow.

The present invention has been described above with reference to a number of exemplary embodiments and examples. It should be appreciated that the particular embodiments shown and described herein are illustrative of the invention and its best mode and are not intended to limit in any way the scope of the invention as set forth in the claims. It will be recognized that changes and modifications may be made to the exemplary embodiments without departing from the scope of the present invention, as expressed in the following claims.

## Claims

1. A system for automatically displaying information based on a context of a task, the system comprising:
a device comprising a display and a task client for receiving a task input from a user;
a registrar comprising metadata associated with an information display configuration; and
an engine for comparing the task input and data within the registrar to determine a context of the task;
wherein a configuration of information displayed on the client device corresponds to the context of the task.

2. The system of claim 1, further comprising a task application, and optionally wherein the task application is a search application.

3. The system of any preceding claim, wherein the device is selected from the group consisting of smart phone, a tablet computer, a personal computer, a work station, a server, and a conference unit.

4. The system of any preceding claim, wherein the engine infers a display configuration if a match is not found between the data and the task input.

5. The system of any preceding claim, wherein the registrar includes a plurality of presentation metadata for the context.

6. The system of any preceding claim, wherein an application populates the registrar with metadata.

7. The system of any preceding claim, further comprising a learning engine, wherein the learning engine populates the registrar with metadata.

8. The system of any preceding claim, wherein the registrar includes information for normalization, thesaurus mapping, auto-completion, and contextual application launch.

9. The system of any preceding claim, wherein the configuration is selected from one or more of a tree format, a list, and a table.

10. A method for automatically displaying information based on a context of a task, the method comprising the steps of:
providing a client for receiving a task from a user;
providing a registrar comprising metadata associated with an information display configuration;
entering a task using the client;
optionally, an application providing one or more suggested strings;
optionally, accepting a string;
querying the registrar for context lookup;
using an application to determine a context of a task;
determining presentation metadata corresponding to the task;
performing the task; and
displaying information resulting from the task, wherein the information is displayed in a configuration corresponding to the presentation metadata.

11. The method of claim 10, wherein the step of performing a task comprises performing a search.

12. The method of claim 10, further comprising the step of registering data with the registrar, and optionally wherein the step of registering includes employing a learning engine.

13. A method for automatically displaying information based on a context of a task, the method comprising the steps of:
launching an application;
querying for presentation metadata in a registrar;
sending presentation metadata to the application; and
sending presentation information to a user client to display application information in a context that corresponds to the context of the task.

14. The method of claim 13, further comprising the step of registering data with the registrar, and optionally wherein the step of registering includes employing a learning engine.

15. The method of claim 13, further comprising:
the step of entering a task using the user client and/or
the step of providing one or more suggested strings and/or
the step of a search and launch application step.
